# EUROPEAN PATENT APPLICATION

(11) **EP 2 677 587 A1**
(43) Date of publication of application: **25.12.2013**
(21) Application number: 12746900.5
(22) Date of filing: 16.02.2012
(51) Int. Cl.: H01M 10/04, H01M 2/02, H01M 10/0585

(54) **SECONDARY BATTERY**

(30) Priority: 18.02.2011 JP 2011033309
(71) Applicant: Shin-Kobe Electric Machinery Co., Ltd., Tokyo 104-0044 (JP)
(72) Inventor: TANAKA, Akira, Tokyo 104-0044 (JP)
(74) Representative: Calderbank, Thomas Roger
(86) International application number: PCT/JP2012/053668
(87) International publication number: WO 2012/111752

(57) **Abstract**

The present invention provides a secondary battery including stacks that are hermetically enclosed in a battery can with a bottom, each stack having an alternate arrangement of a metallic current collector having a negative electrode active material layer formed on a surface thereof, a separator that retains an electrolyte, and another metallic current collector having a positive electrode active material layer formed on a surface thereof, all of which are in strip form. In the secondary battery, at least one partition plate, which splits an internal space of the battery can at a position opposite wider-side faces of the stacks, is formed between the stacks housed in the battery can.

## Description

### Technical Field

The present invention relates to the structure of a secondary battery.

### Background Art

In recent years, against a background of environmental problems, secondary batteries typified by lithium-ion batteries have been applied not only to moving objects such as hybrid electric vehicles (HEV), electric vehicles (EV), forklifts, and loading shovels but also to industrial uses such as uninterruptible power systems (UPS) and power storage for photovoltaic power generation. With the expansion of the uses of the secondary batteries, an increase in the capacity as well as an increase in the energy density is demanded.

In addition to increasing the performance, increasing the safety is also a significant challenge to be addressed. Among the secondary batteries are nickel-cadmium batteries, nickel-hydrogen batteries, and lithium-ion batteries. As cadmium is toxic, the nickel-cadmium batteries have been replaced with nickel-hydrogen batteries and lithium-ion batteries. Among all the currently available secondary batteries, lithium-ion secondary batteries are particularly suitable for increasing the energy density, and thus are actively developed even now.

The main components of a nickel-hydrogen battery and a lithium-ion secondary battery are a metallic current collector (a negative electrode) having a negative electrode active material layer formed on a surface thereof, a separator that retains an electrolyte, and another metallic current collector (a positive electrode) having a positive electrode active material layer formed on a surface thereof. In regard to a nickel-hydrogen battery, nickel oxide is adopted for the positive electrode, and a hydrogen storage alloy is adopted for the negative electrode, In regard to a lithium-ion secondary battery, lithium-metal oxide is adopted for the positive electrode, and a carbon material such as graphite is adopted for the negative electrode. The battery structures are broadly divided into a cylindrical structure in which belt-like negative electrodes, separators, and positive electrodes are sequentially wound in a spiral fashion, and a stacked structure in which strip-like negative electrodes, separators, and positive electrodes are alternately arranged. Typically, a stacked structure in which strip-like negative electrodes, separators, and positive electrodes are alternately arranged is more suitable for increasing the volume energy density than is a cylindrical structure having a large portion of a volume that does not contribute to the generation of power, like an axial core for winding the belt-like negative electrodes, separators, and positive electrodes. This is because the stacked structure, which requires no axial core for winding, and has a positive electrode terminal and a negative electrode terminal for external output that can be easily formed on the same plane, can have a reduced volume of a portion other than the portion that contributes to the generation of power.

In addition, the cylindrical structure and the stacked structure are found to have a difference in the way in which a battery can expands in response to an increase in the internal pressure of the battery can. The causes of the increase in the internal pressure of the battery can include a volume expansion that occurs when lithium ions migrate into the gaps between the negative electrode layers in charging, generation of gas due to the decomposition of excess Li₂CO₃, and a decomposition reaction of an electrolytic solution that occurs upon a temperature increase due to the Joule heat resulting from overcharge or the like. The cylindrical structure, which has belt-like negative electrodes, separators, and positive electrodes sequentially wound in spirals, undergoes small expansion in the circumferential direction and the radial direction in response to a pressure increase in the battery can, while the stacked structure tends to easily undergo expansion in the direction of the wider-side faces of the stacked electrode plates as gas accumulates in the gaps between the stacked electrode plates and the like. A battery being expanded means an increase in the distance between the electrodes, having an adverse effect on the battery performance. That is, as the ion conduction path becomes longer, it would become more difficult to obtain high discharge capacity.

Further, the cylindrical structure and the stacked structure are also found to have a difference in the heat radiation property. In regard to the cylindrical structure, a power generation element, which includes a positive electrode, a separator, and a negative electrode arranged with the axial core as the central axis, can be regarded as having an axisymmetric shape, and heat transmitted in the radial direction typically exhibits the same heat distribution on any axisymmetric cross section that is parallel with the axis. Meanwhile, the stacked structure, which is the structure of a stack of electrode plates, has different thermal resistance in the stacked direction and in the plane direction, and thus has anisotropic thermal conduction. Typically, thermal conduction in the stacked direction in which the electrode plates are stacked has lower thermal conduction than in the plane direction. As the number of electrode plates increases with an increase in the battery capacity, the stacked structure will have an increased thickness of the stacked layers. Therefore, the distance between the surface of the battery can and the center of the battery can will increase, and thus the heat radiation property of the electrode plate located at the center of the battery can will decrease, thereby increasing the temperature of the plate electrode. This may result in a decrease in the battery property as well as a decrease in the reliability and safety.

As described above, a stacked battery, which can have increased energy density, should have suppressed expansion of the battery as well as an increased heat radiation property. To suppress the expansion of the battery, the following proposals have been made so far. For example, Patent Literature 1 discloses an invention in which the thickness of a pair of opposite wider-side faces of a battery can is made greater than the thickness of a pair of opposite narrower-side faces. In addition, Patent Literature 2 discloses an invention in which a battery can has a mono-block structure with partitions with a thickness of 0.5 mm or less.

With regard to the heat radiation property of a battery, the following proposals have been made. For example, Patent Literature 3 attempts to increase the heat radiation property by winding a high thermal conductive sheet around stacked electrodes. In addition, Patent Literature 4 attempts to increase the heat radiation property by including an electrically insulating inorganic material, which has excellent thermal conductivity, in a solid electrolyte.

### Citation List

### Patent Literature

Patent Literature 1: JP 3114768 B
Patent Literature 2: JP 2000-182572 A
Patent Literature 3: JP H10-40959 A
Patent Literature 4: JP H8-255615A

### Summary of Invention

### Technical Problem

When the battery capacity of a stacked battery increases, the number of the stacked layers of electrode plates also increases. Thus, a volume expansion, which occurs when lithium ions migrate into the gap between the negative electrode layers in charging, will increase. Such volume expansion of the negative electrodes has an influence on the expansion in the stacked direction. In addition, with an increase in the battery capacity, the amount of the electrolytic solution also increases. Thus, the gas pressure due to the decomposition of the electrolytic solution or the like will also increase. Such a gas pressure is applied isotropically to the side faces of the battery can. Thus, it has an influence on the expansion of the inner side of the battery can in all directions. In addition, as a battery with high capacity has an increased amount of heat generated with an increase in the number of electrode plates, a heat radiation property is a significant challenge to be addressed. Thus, it is important to suppress an increase in the thermal resistance of the inside of the battery as much as possible and increase the heat radiation property.

In regard to the structure in which the thickness of the wider-side face of the battery can is made greater than the thickness of the narrower-side face as disclosed in Patent Literature 1, the thermal conduction path becomes longer with an increase in the can thickness of the wider-side face of the exposed outer wall. Thus, there is a possibility that the thermal resistance may increase. Further, there is no disclosure about the correspondence relationship between the wider-side faces of stacks housed in the battery can and the wider-side face of the battery can. Thus, if the number of the stacked layers of electrode plates increases with an increase in the capacity, and a face that corresponds to the wider-side faces of the stacks does not coincide with the wider-side face of the battery can, no effect on the expansion in the stacked direction of the stacks can be expected even if the plate thickness of the wider-side face of the battery can is increased.

Although Patent Literature 2 proposes a mono-block structure of a battery can with partitions with a thickness of 0.5 mm or less, it is difficult with the thickness of 0.5 mm or less to suppress the expansion of a high-capacity battery. Further, no measure has been made against the expansion in a direction corresponding to the wider-side faces, which undergo large expansion, of stacks. Thus, both in the case where a single power generation element is used and the case where a plurality of power generation elements are housed in a mono-block can with partitions, expansion in a direction corresponding to the wider-side faces of the stacks is the same, and no measure against expansion that occurs with an increase in the battery capacity has been taken into consideration.

In addition, even when a high thermal conductive sheet is wound around stacked electrodes as in Patent Literature 3, as a thermal conduction path, which transmits heat at the center of the electrode stack to a peripheral portion where the high thermal conductive sheet is present, has not been improved, no big improved effect of the heat radiation property can be expected when the number of electrode plates is increased as in a high-capacity battery. Further, as the prevention of the expansion of the stack is not taken into consideration, no suppression of the expansion can be expected.

Further, even when an inorganic material is included in a solid electrolyte as in Patent Literature 4, the thermal conductivity is low as compared to that of metal. Further, increasing the amount of the inorganic material, which does not contribute to the generation of power, may decrease the battery performance, and no big improvement of the heat radiation property can be expected. Further, as the prevention of the expansion of the stack is not taken into consideration, no suppression of the expansion can be expected.

As described above, a stacked, high-capacity battery has the important challenges to be addressed: suppressing the expansion of a battery can resulting from an increase in the internal pressure that occurs due to a volume expansion of negative electrodes or generation of gas in the battery can, and improving the heat radiation property.
It is an object of the present invention to provide a high-capacity battery with high volume energy density by effectively suppressing the expansion of a battery can against an increase in the internal pressure of the battery and effectively transmitting heat generated from the electrode plates in the battery can to the outside.

### Solution to Problem

According to one means, there is provided a secondary battery including stacks that are hermetically enclosed in a battery can with a bottom, each stack including an alternate arrangement of a metallic current collector having a negative electrode active material layer formed on a surface thereof, a separator that retains an electrolyte, and another metallic current collector having a positive electrode active material layer formed on a surface thereof, all of which are in strip form. A partition plate is formed between at least a pair of stacks among the plurality of stacks housed in the battery can, the partition plate being adapted to split an internal space of the battery can at a position opposite wider-side faces of the stacks.

In this case, the total thickness of outer walls and the partition plate of the battery can that are opposite the wider-side faces of the stacks is preferably greater than the total thickness of the stacks in the plane direction.

In addition, the plate thickness of the partition plate of the battery can is preferably greater than the plate thickness of an outer wall of the battery can.

Further, the partition plate more preferably includes formed therein an opening that penetrates to a front and a rear of the partition plate.

### Advantageous Effects of Invention

The present invention can provide a secondary battery, which has high cycle characteristics and reliability, high capacity, and high energy density, capable of suppressing, even when stacked electrode groups expand due to charging/discharging, deformation of a side face of a battery can for when the battery can expands in the outer direction, and effectively radiating heat generated from the stacks.

### Brief Description of Drawings

Fig. 1 is a partially cut-out perspective view of a battery illustrating an embodiment of the present invention.
Fig. 2 is a schematic plan sectional view of a battery illustrating an embodiment of the present invention.
Fig. 3 is a schematic side sectional view of a battery illustrating an embodiment of the present invention.
Fig. 4 is a schematic plan sectional view of a battery illustrating an embodiment of the present invention.
Fig. 5 is a schematic plan sectional view of a battery illustrating an embodiment of the present invention.
Fig. 6 is a schematic view of a partition plate illustrating an embodiment of the present invention.

### Description of Embodiments

Hereinafter, embodiments of the present invention will be described in detail with reference to the drawings.

### <Embodiment 1>

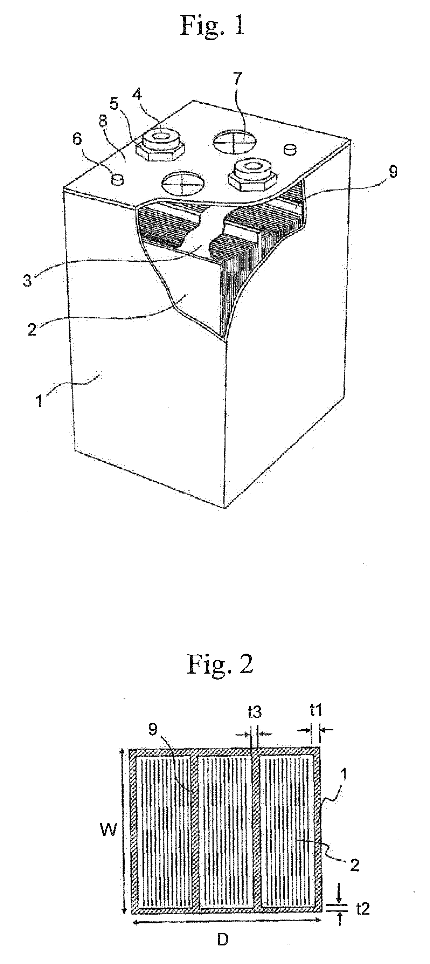

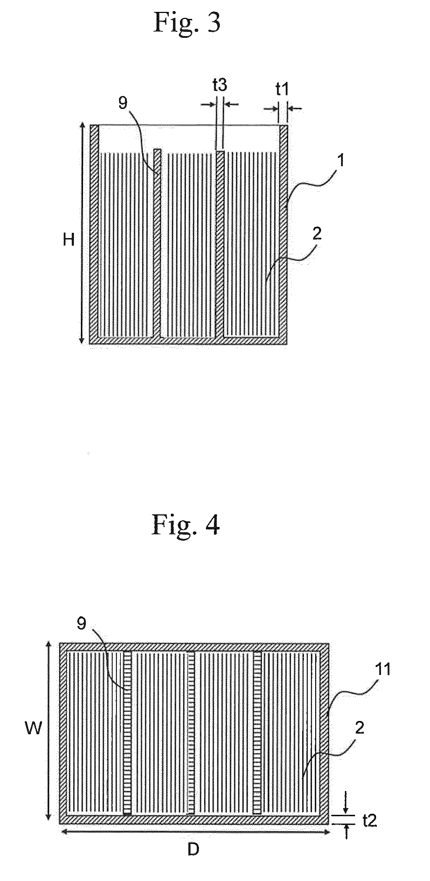

Fig. 1 is a partially cut-out perspective view of a secondary battery illustrating an embodiment of the present invention. Fig. 2 is a schematic plan sectional view of the secondary battery in Fig, 1. Fig. 3 is a schematic side sectional view of the secondary battery in Fig. 1. Figs. 2 and 3 illustrate the arrangement of stacks 2 and a battery can 1 in accordance with the present invention, while a tab, a cap, electrically conductive parts, and the like of the stacks are omitted. In the drawings, a stacked lithium-ion secondary battery with a battery capacity of 210 Ah is illustrated. The stacks 2 are housed in the battery can 1, and are electrically connected to an external terminal 4 via a tab 3. The external terminal 4 is fastened to a cap plate 8 with a fastening part 5 such as a nut. In addition, the cap plate 8 has arranged therein an injection plug 6 that seals an injection hole through which an electrolytic solution is injected, and safety valves 7 for releasing the internal pressure of the battery can 1 in a non-steady state such as overcharge.

In Fig. 1, the stack 2 includes a first metallic current collector (copper) having a negative electrode active material layer formed on a surface thereof, a separator that retains an electrolyte, and a second metallic current collector (aluminum) having a positive electrode active material layer formed on a surface thereof. When the stack 2 is formed in the battery can 1, the first metallic current collectors, the separators, and the second metallic current collectors are formed in strip form, and are alternately stacked. The dimensions such as the thickness and the number of stacked layers of each stack 2 are determined in accordance with the battery capacity that is necessary.

The battery can 1 is prismatic in shape as it houses the rectangular stacks 2. A prismatic battery has an advantage of being possible to have an increased volume energy density as a result of having no axial core or the like for winding, in comparison with a case where belt-like metallic current collectors and separators are wound in cylindrical form and are inserted into a cylindrical battery can. The battery can 1 is formed by molding an aluminum alloy through impact pressing. When the material of the battery can 1 is an aluminum-based metal, the battery can 1 may be produced through die-cast molding. The material of the battery can 1 is preferably a metal material such as, for example, an aluminum-based metal or stainless steel from the perspective of mechanical strength, but it is not limited to metal materials, and resin that is resistant to erosion by an electrolytic solution may also be used, such as fluorine resin, polyethylene, polypropylene, epoxy resin, POM or PEEK. A resin-based battery can has lower material density as compared to a metal-based battery can. Thus, it has an advantage of being lightweight. Meanwhile, the resin-based battery can also has a disadvantage of being mechanically weak and having a low heat radiation property due to its low thermal conductivity.

A tab 3 for electrical connection is formed at an end of the metallic current collectors, which are the constituent materials of each stack 2, in the longitudinal direction thereof. The tab 3 is connected to the external terminal 4 via electrically conductive part (not illustrated). The number of the tabs 3 formed on the stacks 2 is determined depending on the capacity; a battery with a capacity of several ten Ah to several hundred Ah has several ten to several hundred tabs. In the drawing of this embodiment, a plurality of bundled tabs are represented as a single figure as can be seen in the tab 3 in Fig. 3, for example, for the sake of simplicity.

As illustrated in Figs. 2 and 3, the plurality of stacks 2 housed in the battery can 1 are divided into three groups so that a single group has a capacity of 70 Ah. Each stack 2 is arranged in a space split by a partition plate(s) 9 in the battery can with the partition plate(s) as the boundary(ies). Wider-side faces of the stacks 2 are arranged in parallel with the partition plates 9. In this embodiment, two partition plates are arranged in the battery can, and the three groups of stacks 2 are arranged. However, it is acceptable as long as the stacks are divided into two or more groups in accordance with the battery capacity and the number of electrode plates, and a plurality of partition plates 9 may be arranged correspondingly. Providing the partition plates 9 can suppress the displacement of the stacks 2 in the stacked direction. In addition, providing the partition plates 9 can also suppress the expansion of the side face of the battery can 1 in a direction that is orthogonal to the stacked direction of the stacks 2. In this embodiment, the partition plates 9 and the battery can 1 are continuous members and are integrally molded. In the case of a material or a production method that cannot integrally mold the partition plates 9, the partition plates 9 may be produced separately and then secured to the battery can 1 through welding or with an adhesive or the like. The material of the partition plates 9 is preferably the same as that of the battery can 1, but a member of a different material may also be used.

Providing the partition plates 9 allows heat from the stacks 2 to be radiated to the external wall through the partition plates 9. From the perspective of heat radiation property, a greater thickness t3 of the partition plate 9 is effective as it increases the heat conduction area. However, an increase in the thickness of the partition plate 9 may possibly cause a reduction in the volume energy density. Thus, the thickness t3 of the partition plate 9 is preferably suppressed to less than or equal to twice the thickness t1 of the outer wall of the battery can 1. When a plurality of partition plates 9 are provided, the number of electrode plates that form each stack 2 can be suppressed; thus, a displacement due to expansion can be suppressed in accordance with the number of the electrode plates. Further, as the amount of heat generation per stack decreases, the thickness of each partition plate 9 can be reduced. In this embodiment, the thicknesses t1 and t2 of the battery can 1 are each 1 mm, and the thickness t3 of each partition plate 9 is 1.5 mm. The total thickness of the members that constitute the battery can 1 in the stacked direction, that is, the sum of the thickness t1 of the external wall of the battery can 1 and the thickness t3 of the partition plates 9 is 5 mm, which is greater than the sum (2 mm) of the thickness t2 in a direction orthogonal to the stacked direction. In addition, in this embodiment, as illustrated in Fig. 2, the width W of a face of the battery can 1 that corresponds to the wider-side faces of the stacks 2 is 130 mm, the depth D of the battery can 1 in the stacked direction is 155 mm, and the height H of the battery can 1 is 220 mm.

As Comparative Example 1, a battery was produced by providing no partition plate, setting the plate thickness of the battery can in the stacked direction to 2.5 mm, and setting the plate thickness in a direction orthogonal to the stacked direction to 1 mm so that the total plate thickness in the stacked direction became 5 mm, which is the same as the above. The outside dimensions of Comparative Example 1 and this Embodiment 1 are the same. Using the battery produced in accordance with this Embodiment 1 and the battery produced as Comparative Example 1, the amount of expansion and the temperature after five cycles of charging/discharging were measured, For the amount of expansion, a change in the maximum thickness of the battery can 1 in the stacked direction corresponding to the wider-side faces of the stacks 2 of the battery before and after the charging/discharging was measured. For the temperature, a change in the temperature at the center of the inside of the battery before and after the charging/discharging was measured. Consequently, in Embodiment 1 in which the partition plates 9 are provided, both the amount of expansion and the temperature were possible to be suppressed in comparison with those of Comparative Example 1 in which no partition plate is provided.

### <Embodiment 2>

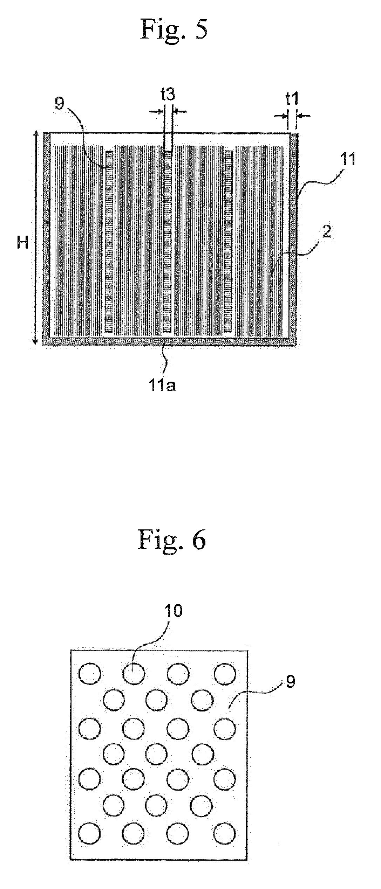

Fig. 4 is a schematic plan sectional view of a secondary battery illustrating an embodiment of the present invention. Fig. 5 is a schematic side-face sectional view of Fig. 4. Illustrated herein is a 280 Ah stacked lithium-ion secondary battery having four groups of stacks 2. Single group of stack 2 has a capacity of 70 Ah. The outside dimensions of the battery can 1 are the width W: 130 mm, the depth D: 205 mm, and the height H: 220 mm. The battery can 1 includes a peripheral body 11 made of stainless steel and a plurality of partition plates 9. The partition plates 9 are secured to the peripheral body 11 through welding. As illustrated in Fig. 5, the height of the partition plates 9 is set lower than the height of the peripheral body 11 of the battery can 1, and a bottom face 11a of the peripheral body 11 of the battery can 1 is not in contact with the partition plates 9, so that an electrolyte solution can freely move through a space between the stacks 2.

In this embodiment, plates without holes are used for the partition plates 9. However, as illustrated in Fig. 6, partition plates 9 with a plurality of through-holes may also be used. Alternatively, mesh partition plates 9 such as expanded metal may also be used. However, if the ratio of opening area is high, the thermal conductivity will decrease. Thus, the ratio of opening area is desirably less than or equal to 50 %. In addition, although plate-form partition plates 9 are used in this embodiment, wavy partition plates or partition plates having concavities and convexities formed on surfaces thereof may also be used. The plate thickness t1 of the peripheral body 11 of the battery can 1 and the plate thickness t3 of the partition plates 9 are each 1 mm. The total plate thickness in the stacked direction corresponding to the wider-side faces of the stacks 2, inclusive of the plate thickness of the partition plates 9 and the plate thickness of the peripheral body 11, is 5 mm as there are arranged three partition plates 9. Meanwhile, the total plate thickness in a direction orthogonal to the stacked direction is 2 mm.

As Comparative Example 2, a battery with the same outside dimensions as those of Embodiment 2 was produced with the same material as that of Embodiment 2 by providing no partition plate and setting the plate thickness in the stacked direction to 2.5 mm so that the total plate thickness in the stacked direction became 5 mm, which is the same as that in Embodiment 2. As with the measurement explained in Embodiment 1, expansion of the battery can corresponding to the wider-side faces of the stacks 2 of the battery and the temperature at the center of the inside of the battery before and after charging/discharging were measured. Consequently, in this embodiment in which the partition plates 9 are provided, both the amount of expansion and the temperature were possible to be suppressed in comparison with those of Comparative Example 2 in which no partition plate is provided.

### Reference Signs List

- 1: Battery can
- 2: Stack
- 3: Tab
- 4: Terminal
- 5: Fastening part
- 6: Liquid injection plug
- 7: Safety valve
- 8: Cap
- 9: Partition plate
- 10: Hole
- 11: Battery can peripheral body

## Claims

1. A secondary battery comprising:
stacks that are hermetically enclosed in a battery can with a bottom, each stack comprising a first metallic current collector having a negative electrode active material, layer formed on a surface thereof, a separator that retains an electrolyte, and a second metallic current collector having a positive electrode active material layer formed on a surface thereof, all of which are formed in strip form, and each stack having an alternate arrangement of the first metallic current collector, the separator, and the second metallic current collector,
wherein a partition plate is formed between at least a pair of stacks among the plurality of stacks housed in the battery can, the partition plate being adapted to split an internal space of the battery can at a position opposite wider-side faces of the stacks.

2. The secondary battery according to claim 1, wherein a total thickness of outer walls and the partition plate of the battery can that are opposite the wider-side faces of the stacks is greater than a total thickness of the stacks in a plane direction.

3. The secondary battery according to claim 1, wherein a plate thickness of the partition plate of the battery can is greater than a plate thickness of an outer wall of the battery can.

4. The secondary battery according to claim 1, wherein the partition plate comprises formed therein an opening that penetrates to a front and a rear of the partition plate.
